# EUROPEAN PATENT SPECIFICATION

(11) **EP 0 617 299 B1**
(45) Date of publication and mention of the grant of the patent: **09.06.1999**
(21) Application number: 94104691.4
(22) Date of filing: 24.03.1994
(51) Int. Cl.: G02B 5/02, C08F 265/04

(54) **Process of manufacture of polymer particles with refractive index distribution and process of manufacture of a light distributor**
Verfahren zur Herstellung von Polymerpartikeln mit Brechungsindexverteilung und Verfahren zur Herstellung von einem Lichtverteiler
Procédé de fabrication de particules polymères à distribution d'index de refraction et procédé de fabrication d'un distributeur de lumière

(30) Priority: 26.03.1993 JP 6794793
(43) Date of publication of application: 28.09.1994
(73) Proprietor: SUMITOMO CHEMICAL COMPANY LIMITED, Osaka-shi, Osaka 541-0041 (JP)
(72) Inventor: Yamazaki, Kazuhiro, Niihama-shi (JP)
(74) Representative: VOSSIUS & PARTNER

(56) References cited:
- EP-A- 0 269 324
- EP-A- 0 294 122
- DATABASE WPI Week 8710, Derwent Publications Ltd., London, GB; AN 87-069213 & JP-A-62 023 001 (NIPPON SHEET GLASS) 31 January 1987
- DATABASE WPI Week 7742, Derwent Publications Ltd., London, GB; AN 77-74920Y & JP-A-52 106 751 (MITSUBISHI ELECTRIC) 7 September 1977
- DATABASE WPI Week 8726, Derwent Publications Ltd., London, GB; AN 87-182381 & JP-A-62 113 102 (NIPPON SHEET GLASS) 25 May 1987
- PATENT ABSTRACTS OF JAPAN vol. 14, no. 341 (P-1081) 24 July 1990 & JP-A-02 120 702 (DAINIPPON PRINTING) 8 May 1990

## Description

The present invention relates to a process of manufacture of polymer particles having a refractive index distribution and to a process of manufacture of a light distributor. More particularly, it relates to the manufacture of a light distributor controlled to allow distribution of light only in the incident direction of light while greatly reducing light distribution in the opposite direction.

As techniques for affording light distributing properties to a transparent material, a method is known in which a light distributing agent comprising glass particles, particles of a white pigment such as titanium oxide, inorganic transparent crystal particles such as calcium carbonate, transparent polymer particles or the like are dispersed in an insular pattern in a transparent material. The light distributors produced by making use of such techniques have been applied to various commercial products such as illuminant cover, projection television screen, surface luminescent devices showing uniform luminance, etc.

Recently, from the standpoints of saving of energy and high performance, request is rising for a light distributor of the type capable of substantially distributing light in the incident direction of light while inhibiting light distribution in the opposite direction.

Regarding such optically controlled light distributors, there are known ones in which the difference in refractive index between the light distributing agent and the transparent base material and the particle diameter of the light distributing agent are defined in the specified ranges. For instance, JP-B-60-21662 discloses a light distributing resin produced by dispersing in a transparent resin a powder of a transparent material having refractive index which is 0.01-0.1 smaller than that of the transparent resin and an average particle size of from 1 to 10 µm. JP-A-02-6557 discloses a light distributing plastic in which the difference in refractive index between the light distributing agent and the transparent plastic is 0.02-0.04 and the particle size of the light distributing agent is 7-30 µm. Further, JP-A-63-205602 discloses a light distributing plate specified by the effective and non-effective projected areas which are decided by the ratio in refractive index of the transparent resin to the light distributing agent, particle size of the light distributing agent and content thereof.

There are also known light distributors using a light distributing agent of a specific composition. For instance, JP-B-01-53901 discloses a light distributing acrylic resin comprising a methyl methacrylate polymer and, dispersed therein, the crosslinked particles obtained by suspension polymerizing an aromatic vinyl monomer, an alkyl acrylate in which the alkyl group has 1-8 carbon atoms, and a crosslinkable monomer, said particles being 10-500 µm in diameter and having a gel content of 40-90 wt% and a degree of swelling of 3-25. JP-A-01-172801 discloses a light distributing plate produced by using as light distributing agent the spherical particles of a solid-state silicone resin having a polysiloxane structure in which the organic group having affinity for the base transparent resin is bonded to silicon atoms, said particles being 0.3-10 µm in average diameter.

There are further known the light distributors using two or more different types of light distributing agent. For example, JP-A-63-291001 discloses a light distributing plate having dispersed therein 2-20 wt% of the crosslinked organic polymer particles of which the difference in refractive index from the base transparent resin is 0.001-0.08 and whose average diameter is 20-80 µm and 0.1-5 wt% of the crosslinked organic polymer particles of which the difference in refractive index from the base transparent resin of 0.02-0.1 and whose average diameter is 2-20 µm.

In any of these known light distributors, light is distributed by refracting the light in its incident direction based on the gap of refractive index produced at the boundary between the transparent material and the light distributing agent, but in these light distributors, part of the light is reflected due to this gap of refractive index, causing distribution of light in the direction opposite to the incident direction of light. Thus, there has been a limit, in principle, to the effort that can be made for distributing light in the incident direction of light alone while inhibiting distribution of light in the opposite direction.

JP-A-2-120702 discloses the light distributing particles produced by emulsion polymerizing styrene and gradually increasing the ratio of methyl methacrylate in accordance with progress of polymerization so that the refractive index of the particles increases continuously from the peripheral portion toward the center, and a light distributor obtained by using these particles.

However, in the case of the light distributing agent obtained according to the method disclosed in the above patent, it is very difficult to make the particle diameter greater than a certain level, for example, greater than 1 µm, and also difficulties are involved in removing the emulsifier from the particles of said light distributing agent, so that the products obtained by using these particles are subject to occurrence of the problems such as tinting and clouding due to the influence of the residual emulsifier, and thus the antireflection effect of the agent is not satisfactorily obtained.

JP-A-62113102 relates to spherical polymer particles exhibiting a refractive index gradient from the center towards the periphery of the sphere. The particles are obtained by polymerization of monomers (A) or a prepolymerized sol thereof in suspension, leading to the formation of a polymer P(A). While the polymerization is still incomplete, it is interrupted, and a second monomer (B) whose polymer P(B) has a different refractive index than P(A) is allowed to diffuse into the spherical gel granules formed in the first step. Thereafter, polymerization is completed, e.g. by heat treatment of the granules.

As viewed above, any of the conventional light distributors was unsatisfactory in some respect or other.

The object of the present invention is to provide a light distributor having high light controlling performance and capable of substantially distributing light in the incident direction of light while inhibiting reflection of light in the opposite direction.

The above object of the present invention can surprisingly be ful-filled by presenting process for producing a light distributor comprising a transparent body obtained by dispersing the polymer particles, which have been produced by suspension polymerizing two different types of radical polymerizable monomer components differing in refractive index from each other by a specific method, in a transparent polymer having a refractive index substantially equal to that of the peripheral portion of said polymer particles. The present invention has been attained on the basis of this finding.

Thus, the present invention provides a process of providing polymer particles having a refractive index distribution according to claim 1 and a process of producing a light distributor according to claim 2. According to the invention, a transparent body is obtained by dispersing the polymer particles having a specific refractive index distribution in a transparent polymer having a refractive index substantially equal to that of the peripheral portion of said polymer particles, said polymer particles being produced by using two radical polymerizable monomer components whose respective polymers differ by 0.005 or more in refractive index from each other, suspension polymerizing one (A) of said radical polymerizable monomer components in an aqueous medium in the presence of an oil-soluble polymerization initiator, starting addition of the other radical polymerizable monomer component (B) while the conversion of said monomer component (A) is in the range of 70-95%, and continuing polymerization by adding said monomer component (B) substantially continuously without freshly supplying the polymerization initiator.

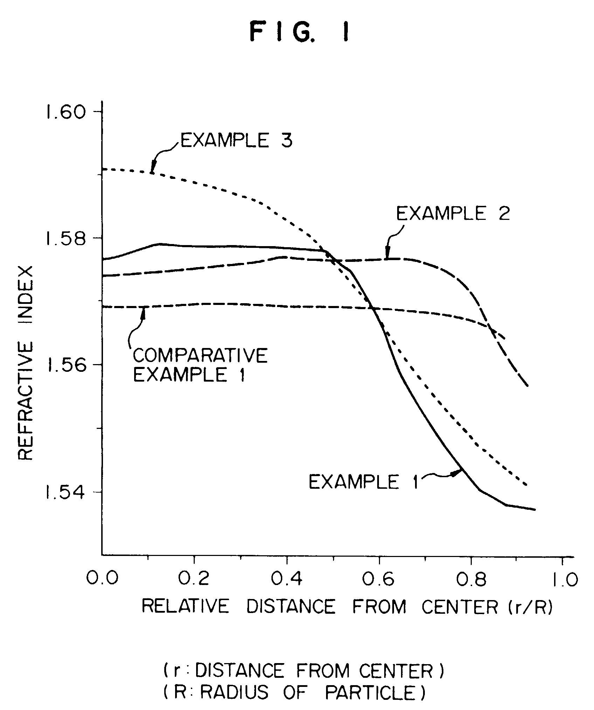

Fig. 1 shows the refractive index distribution of the products obtained in Examples 1-3 and comparative Example 1 described later.

The present invention is described in detail below.

The light distributor according to the present invention is made of a transparent body obtained by dispersing the polymer particles having a specific refractive index distribution in a transparent polymer having a refractive index substantially equal to that of the peripheral portion of said polymer particles, said polymer particles being produced by using two radical polymerizable monomer components whose respective polymers differ by 0.005 or more in refractive index from each other, suspension polymerizing one (A) of said radical polymerizable monomer components in an aqueous medium in the presence of an oil-soluble polymerization initiator, starting addition of the other radical polymerizable monomer component (B) while the conversion of said monomer component is in the range of 70-95%, and continuing polymerization by adding said monomer component (B) substantially continuously without freshly supplying the polymerization initiator.

### Preparation of polymer particles

The monomers used for the radical polymerizable monomer components (A) and (B) in the present invention are selected from those which can form the transparent polymers. Examples of such monomers include styrene and styrene derivatives such as o-methylstyrene, m-methylstyrene, m-methylstyrene, p-methoxystyrene, p-ethylstyrene and o-chlorostyrene; polymerizable monomers having benzene rings, for example, esters of methacrylic or acrylic acid and alcohols having a benzene ring, such as phenyl methacrylate, benzyl methacrylate, phenyl acrylate and benzyl acrylate; methacrylic acid alkyl or cycloalkyl esters such as methyl methacrylate, ethyl methacrylate, propyl methacrylate, n-butyl methacrylate, isobutyl methacrylate, n-octyl methacrylate, n-dodecyl methacrylate, 2-ethylhexyl methacrylate and cyclohexyl methacrylate; acrylic alkyl or haloalkyl esters such as methyl acrylate, ethyl acrylate, n-butyl acrylate, isobutyl acrylate, propyl acrylate, octyl acrylate, dodecyl acrylate, stearyl acrylate and 2-chloroethyl acrylate; and vinyl monomers such as acrylonitrile, methacrylonitrile, vinyl acetate, acrylamide and maleimide.

The refractive indices of the homopolymers of these monomers are mentioned in many prior publications such as, for example, POLYMER HANDBOOK, Third Edition, VI/ p. 451-462, Refractive Indices of Polymers.

The radical polymerizable monomer components (A) and (B) used in the present invention need to be ones whose respective polymers have a difference of refractive index (Δm) of 0.005 or greater between them.

Each of said monomer components (A) and (B) may be a mixture of two or more different types of monomers, and in this case, it is also necessary to select the monomers to be mixed such that Δm between the random copolymer obtained from said monomer (A) and the random copolymer obtained from said monomer (B) will be 0.005 or greater.

In case each of said monomer components (A) and (B) is a mixture of two or more different types of monomers, such monomers are preferably those which are dissolved with each other in the mixture. Also, (A) and/or (B) may be a mixture containing a polyfunctional monomer or monomers having two or more radical polymerizable functional groups in the molecule.

Such polyfunctional monomers may be the known ones, which include difunctional monomers such as (poly)ethylene glycol di(meth)acrylate, (poly)propylene glycol di(meth)acrylate, 1,4-butanediol (meth)acrylate, 1,6-hexanediol (meth)acrylate, allyl (meth)acrylate, allyl cinnamate and divinylbenzene; trifunctional monomers such as trimethylolpropane tri(meth)acrylate, triallyl trimellitate and diallyl maleate; and tetrafunctional monomers such as pentaerythritol tetra(meth)acrylate.

The amount of said polyfunctional monomer used is usually 0.5-10 wt%, preferably 2-10 wt% in said monomer component (A) or (B).

The amount of (B) added is usually 1/3 to 3 times the amount of (A) by weight. When the amount of (B) is too small, the change of refractive index in the obtained polymer particles is too small to provide the desired light distributing performance to the produced light distributor. Too large an amount of (B) makes it hard to complete polymerization in a desired way.

It is more preferable that said monomer components (A) and (B) are such that the polymers formed by polymerizing said respective components will have a certain degree of miscibility with each other.

The following methods may be employed for selecting the monomer components that can form the polymers having such miscibility: (A) and (B) are selected so that each polymer of (A) and (B) has at least one common monomer unit.

For example, styrene (refractive index of its homopolymer: 1.59) is used as (A) while a mixture of styrene and methyl methacrylate (refractive index of its homopolymer: 1.49) is used as (B), or a mixture composed of styrene and a small quantity of methyl methacrylate is used as (A) while a mixture composed of methyl methacrylate and a small quantity of styrene is used as (B).

Organic peroxides or azo compounds may be used as the oil-soluble polymerization initiator in the present invention. Typical examples of such polymerization initiators are diisopropyl peroxydicarbonate, t-butylperoxy-2-ethyl hexanoate, t-butyl peroxypivalate, lauroyl peroxide, benzoyl peroxide, t-butyl peroxybenzoate and azobisisobutylonitrile. These compounds may be used either singly or as a mixture. The oil-soluble polymerization initiator is usually used in an amount of 0.02-2 parts by weight to 100 parts by weight of (A).

The oil-soluble polymerization initiator may be previously dissolved in the monomer component (A), or they may be separately added to the aqueous medium and mixed.

The aqueous medium used in this polymerization process is an aqueous solution containing a suspension stabilizer and, if necessary, a suspension co-stabilizer and useful for suspension polymerization.

As the suspension stabilizer, any of the known types suited to the type of monomer material used may be employed. Examples of the suspension stabilizers usable in this invention include polymer dispersants such as polyvinyl alcohol, methyl cellulose and sodium polymethacrylate and inorganic dispersants such as barium sulfate, calcium phosphate and aluminum hydroxide.

As for the suspension co-stabilizer, it is also possible to employ any of the known types suited to the monomer component used, which include anionic surfactants such as sodium dodecylbenzenesulfonate and sodium laurylsulfate, and inorganic salts such as sodium-carbonate, disodium hydrogenphosphate and sodium dihydrogenphosphate.

These suspension stabilizer and suspension costabilizer are usually added before start of polymerization, but if necessary, a part thereof may be added in proper proportions in the course of polymerization.

Reaction temperature is usually around 60-120°C, but any temperature suited to the action of the polymerization initiator may be used.

A known method may be employed for stirring; it is possible to properly apply the ordinary suspension polymerization conditions suited to the monomers used.

As the polymerization apparatus, there is used a polymerization vessel provided with a stirrer having a known type of stirring impeller such as turbine impeller, Pfaudler-type impeller, propeller impeller or Brumagin-type impeller, and said vessel is usually provided with a baffle.

The polymerization process in the production of said polymer particles comprises initially carrying out suspension polymerization of the monomer component (A) and starting addition of the monomer component (B) when the conversion of said monomer component (A) has reached 70-95%, preferably 85-95%.

When adding the monomer component (B), it is practical and desirable to beforehand carry out suspension polymerization of the monomer component (A) alone to confirm the time period when the conversion falls within a specified range from the relation between polymerization time and conversion and the exothermic behavior.

When addition of said monomer component (B) is started before the polymerization rate of the component (A) reaches 70%, a substantial portion of the component (B) penetrates and diffuses almost uniformly into the particles composed of said monomer component (A) and its polymer, so that there are produced the polymer particles having an almost uniform refractive index distribution. A light distributor having a satisfactory light distributing performance can not be obtained by use of such particles.

When addition of the monomer component (B) is started after the polymerization rate of the component (A) has exceeded 95%, the degree of penetration and diffusion of said component (B) in the inside of the polymer particles becomes too low, which may give rise to a portion where the refractive index changes discontinuously in the polymer particles, or may cause deactivation of the polymerization initiator to retard progress of polymerization.

In carrying out polymerization of the monomer component (B), no fresh supply of radical polymerization initiator is made. In other words, no radical polymerization initiator is contained in the component (B) nor is made additional supply of radical polymerization initiator for the component (B).

When the radical polymerization initiator is freshly added for polymerization of the component (B), there are formed the polymer particles composed of said component (B) alone, and formation of the polymer particles having the desired refractive index distribution is hampered.

The monomer component (B) is added substantially continuously.

The term "added substantially continuously" signifies a mode of supply in which the monomers are supplied in accordance with progress of polymerization so that the monomers will exist in a ratio of usually about 5-30%, preferably about 5-15%, based on the sum of the monomers and polymers. In the mode mentioned above, the monomers may be added continuously or intermittently as long as the ratio is maintained. After addition of the component (B), polymerization is continued until no monomer is left. On completion of polymerization, the particles are taken out by a known solid-liquid separating method and, if necessary, subjected to ordinary washing, dehydration and drying to obtain the desired polymer particles.

The polymer particles produced in the present invention are usually of a size of about 10-500 µm in average diameter and have a specific pattern of refractive index distribution in which the refractive index changes continuously.

### Production of light distributor

The polymer particles obtained in the manner described above are dispersed in a transparent polymer having a refractive index substantially equal to that of the peripheral portion of said polymer particles to form a transparent body, and this transparent body is molded into a desired form to obtain a light distributor.

Several methods are available for determining the refractive index of the peripheral portion of said particles. In one method, the refractive index of said particles is determined by immersion method utilizing the change of position of Becke line. In another method, the change of refractive index in the particle is determined by the interferometric technique using the shearing method, described in Applied Optics, Vol. 25, No. 19, 1 October 1986, to know the refractive index of the peripheral portion of the particle.

The transparent polymer having a refractive index substantially equal to that of the peripheral portion of the particle, which is used in the present invention, is the one specified by the fact that the difference Δp between the refractive index of said polymer and that of the peripheral portion of said particle is 0.01 or less, and is 1/2 or less of the difference Δq between the maximal and minimal values of refractive index in said polymer particle.

When Δp is greater than 0.01 or greater than 1/2 of Δq, there is produced a gap of refractive index at the interface between the transparent polymer and said polymer particle, and this causes reflection of light to encourage distribution of light in the backward direction.

Known methods can be applied for dispersing said polymer particles in a transparent polymer. For example, both are mixed mechanically by a Henschel mixer, tumbler or such and then melted and kneaded by a Banbury mixer or a single- or twin-screw extruder. In another method, said polymer particles are mixed in a syrup containing the monomers forming the transparent polymer and their partial polymers and the mixture is subjected to cast or suspension polymerization.

The amount of said polymer particles used is properly decided according to the type of the particles and the purpose of use of the product, but generally it is 0.0001-100 parts by weight to 100 parts by weight of the transparent polymer.

After forming a transparent body by dispersing said polymer particles in a transparent polymer as described above, this transparent body is molded into a desired form by a known method, for example, a method comprising injection or hot press molding, a method in which the transparent body is molded into a sheet by rolls which have desired pattern after kneaded by an extruder, or a method in which molding is performed by cutting or grinding, thereby to obtain a desired light distributor.

According to the present invention, by substantially eliminating the discontinuous section of refractive index in the light distributor, it is possible to let light distribute mostly in the incident direction of light while greatly reducing distribution of light in the opposite direction.

The light distributor of this invention, when applied to a pertinent article such as illuminant cover or projection TV screen, can efficiently distribute light in such article.

The present invention is further described below with reference to the examples, which examples however are merely intended to be illustrative and not to be construed as limiting the scope of the invention.

The refractive index distribution in the following Examples was measured according to the method shown in Applied Optics, Vol. 25, No. 19, by using an Interphako interference microscope mfd. by Carl-Zeiss Corp.

The polymer particle size was measured by a particle size analyzer utilizing scattering phenomena Microtrack FRA mfd. by Leeds & Northrup Ltd. and shown by volume average.

For press molding, a hydraulic press Model ASF mfd. by Shinto Metal Industries Co., Ltd. was used.

The total light transmittance and haze of the obtained light distributors were measured by a POIC-type integrating sphere hazemeter mfd. by Nippon Seimitsu Kogaku Co., Ltd.

### Example 1

3,500 g of ion exchange water, 0.88 g of sodium polymethacrylate and 10.50 g of disodium hydrogenphosphate were supplied into a 5-litre glass container provided with a stirrer. Then 500 g of styrene containing 5.0 g of benzoyl peroxide was supplied and dispersed with stirring at 800 r.p.m., and the mixture was heated to 85°C to start polymerization. Starting at the moment when the polymerization rate after the lapse of 185 minutes became 90%, a mixture of 200 g of methyl methacrylate, 50 g of styrene and 2.5 g of ethylene glycol dimethacrylate was added continuously over a period of 110 minutes. The mixture was further polymerized for 60 minutes, followed by dehydration, washing and drying to obtain 685 g of the polymer particles having an average diameter of 406 µm.

The result of determination of refractive index distribution is shown in Fig. 1.

### Comparative Example 1

The procedure of Example 1 was carried out except that continuous addition of said mixed solution was started at the moment when the polymerization rate after the lapse of 125 minutes became 60%, instead of the moment when the polymerization rate after the lapse of 185 minutes became 90%. There were obtained 658 g of the polymer particles having an average diameter of 206 µm.

The result of determination of refractive index distribution is shown in Fig. 1.

### Comparative Example 2

The procedure of Example 1 was followed except that continuous addition of said mixed solution was started at the moment when the polymerization rate after the end of the exothermic peak of polymerization of 225 minutes became 99%, instead of the moment when the polymerization rate after the lapse of 185 minutes of initial polymerization became 90%. Poymerization stopped substantially in about 10 minutes after start of later addition of monomers, and the desired polymer, particles could not be obtained.

### Example 2

The procedure of Example 1 was followed except that 5.0 g of ethylene glycol dimethacrylate was added to styrene used for initial polymerization.

There were obtained 680 g of the polymer particles having an average diameter of 144 µm.

The result of determination of refractive index distribution is shown in Fig. 1.

### Example 3

1,000 g of ion exchange water and 24.5 g of sodium phosphate dodecahydrate were supplied into a 2-litre glass container equipped with a stirrer. Then 12.9 g of calcium chloride was added with stirring at high speed, followed by further addition of 0.2 g of sodium cetyl sulfate and 2.0 g of disodium hydrogenphosphate. The supplied materials were dissolved at 50°C. Then a monomer consisting of 100 g of styrene containing 1.0 g of benzoyl peroxide and 4 g of divinyl benzene was supplied and the mixture was stirred by a homomixer (mfd. by Tokushu Kika Kogyo Co., Ltd.; vane diameter: 25 mm) at 4,500 r.p.m. for 30 minutes. The resulting suspension was heated to 80°C while stirring at 300 r.p.m. to start polymerization. At the point when the polymerization rate after the lapse of 130 minutes became 90%, the reaction mixture was heated to 85°C and a mixed solution consisting of 100 g of isobutyl methacrylate and 4.0 g of ethylene glycol dimethacrylate was added continuously over a period of 300 minutes. After 60-minute polymerization, the reaction product was cooled and 40 ml of 36% hydrochloric acid water was added to decompose calcium phosphate, after which the reaction product was dehydrated, washed and dried to obtain 192 g of the desired polymer particles having an average diameter of 25 µm. The result of determination of relative index distribution is shown in Fig. 1.

### Example 4

2,500 g of ion exchange water, 0.65 g of sodium polymethacrylate and 7.5 g of disodium hydrogenphosphate were supplied into a 5-litre glass container provided with a stirrer. Then a mixture of 1,300 g of styrene and 700 g of methyl methacrylate containing 20 g of benzoylperoxide were supplied and dispersed with stirring at 1,300 r.p.m. The mixture was polymerized at 85°C for 150 minutes and the resulting product was dehydrated, washed and dried to obtain the polymer particles having a refractive index of 1.566 (this product is called matrix resin (A)).

15 parts by weight of the polymer particles obtained in Example 2 and 100 parts by weight of matrix resin (A) were mixed by a mixer and then press molded at 190°C to obtain a 4 x 6 x 0.3 cm light distributor. The results are shown in Table 1.

### Example 5

The procedure of Example 4 was followed except for use of 1,180 g of styrene instead of 1,300 g and 840 g of methyl methacrylate instead of 700 g to obtain the polymer particles having a refractive index of 1.552 (this product is called matrix resin (B)).

Thereafter the same operations as in Example 4 were followed except for use of matrix resin (B) in place of matrix resin (A) to obtain a light distributor. The results are shown in Table 1.

### Comparative Example 3

The procedure of Example 4 was followed except for use of 900 g of styrene instead of 1,300 g and 1,100 g of methyl methacrylate instead of 700 g to obtain the polymer particles having a refractive index of 1.542 (this product is called matrix resin (C)).

Thereafter the same operations as in Example 4 were carried out except for use of matrix resin (C) in place of matrix resin (A) to obtain a light distributor. The results are shown in Table 1.

### Comparative Examples 4-6

3,500 g of ion exchange water, 0.88 g of sodium polymethacrylate and 10.50 g of disodium hydrogenphosphate were supplied into a 5-litre glass container provided with a stirrer. Then a monomer consisting of 500 g of styrene containing 5.0 g of benzoyl peroxide and 5.0 g of ethylene glycol dimethacrylate was supplied and dispersed with stirring at 800 r.p.m. and polymerized at 85°C for 230 minutes. The resulting product was dehydrated, washed and dried to obtain the polymer particles having an average diameter of 287 µm and a refractive index of 1.59.

Thereafter the same operations as in Example 4 were followed by using 15 parts by weight of said polymer particles and 100 parts by weight of the matrix resins (A), (B) and (C) used in Examples 4 and 5 and Comparative Example 3, respectively, to obtain the light distributors. The results are shown in Table 1.

### Example 6

3.000 g of ion exchange water, 0.60 g of sodium polymethacrylate, 3.0 g of disodium hydrogenphosphate, 3.0 g of sodium dihydrogenphosphate and 6.0 g of polyoxyethylene-polyoxypropylene block copolymer were supplied into a 5-litre glass container provided with a stirrer. Then a mixture of 500 g of styrene and 500 g of methyl methacrylate containing 9.0 g of benzoylperoxide were supplied and dispersed with stirring at 1,000 r.p.m. The mixture was polymerized at 85°C for 180 minutes and the resulting product was dehydrated, washed and dried to obtain the polymer particles having a refractive index of 1.544 (this product is called matrix resin (D)).

5 parts by weight of the polymer particles obtained in Example 3 and 100 parts by weight of matrix resin (D) were mixed by a mixer and then press molded at 190°C to obtain a 4 x 6 x 0.3 cm light distributor. The results are shown in Table 1.

### Example 7

The procedure of -Example 6 was followed except for use of 400 g of styrene instead of 500 g and 600 g of methyl methacrylate instead of 500 g to obtain the polymer particles having a refractive index of 1.534 (this product is called matrix resin (E)).

Thereafter the same operations as in Example 6 were followed except for use of matrix resin (E) in place of matrix resin (D) to obtain a light distributor. The results are shown in Table 1.

**Table 1**

| | Δq | Δp | Total light transmittance (%) | Haze (%) |
|---|---|---|---|---|
| Example 4 | 0.03 | 0.006 | 88.8 | 87.2 |
| | | | | |
| " 5 | 0.03 | 0.008 | 87.2 | 89.2 |
| | | | | |
| " 6 | 0.06 | 0.004 | 89.2 | 72.4 |
| | | | | |
| " 7 | 0.06 | 0.006 | 87.7 | 88.6 |
| Comp. Example 3 | 0.03 | 0.018 | 84.6 | 96.3 |
| | | | | |
| " 4 | 0 | 0.024 | 87.9 | 73.7 |
| | | | | |
| " 5 | 0 | 0.038 | 87.1 | 81.6 |
| | | | | |
| " 6 | 0 | 0.048 | 85.1 | 94.0 |

## Claims

1. A process of producing polymer particles having a refractive index distribution, which comprises using two different radical polymerizable monomer components whose respective polymers differ by 0.005 or more in refractive index from each other, suspension polymerizing a first one of said radical polymerizable monomer components in an aqueous medium in the presence of an oil-soluble polymerization initiator, starting addition of the second one of said radical polymerizable monomer components while the conversion of said first monomer component to the polymer is 70-95%, and continuing polymerization without freshly supplying the polymerization initiator, characterized by adding said second monomer component continuously or intermittently in accordance with progress of polymerization so that the monomers will exist in a ratio of 5-30% based on the sum of the monomers and polymers.

2. A process of producing a light distributor comprising the process of producing polymer particles according to claim 1 and the additional step of dispersing these polymer particles in a transparent polymer having a refractive index substantially equal to that of the peripheral portion of said polymer particles.

3. The process according to Claim 1 or 2, wherein addition of the second radical polymerizable monomer component is started while the conversion of the first monomer component to the polymer is 85-95%.

4. The process according to Claim 1 or 2, wherein the first or the second monomer component is composed principally of a polymerizable monomer having a benzene ring.

5. The process according to Claim 1 or 2, wherein the first or the second monomer component is composed principally of an alkyl methacrylate or an alkyl acrylate.

6. The process according to Claim 4 or 5, wherein one of the first and the second monomer components is composed principally of a polymerizable monomer having a benzene ring and the other is composed principally of an alkyl methacrylate or an alkyl acrylate.

7. The process according to Claim 1 or 2, wherein a polyfunctional monomer having two or more radical polymerizable functional groups in the molecule is contained in the first and/or the second monomer component.

8. The process according to Claim 7, wherein said polyfunctional monomer is contained in an amount of 0.5-10 wt% in the monomer component.

9. The process according to Claim 8, wherein said polyfunctional monomer is contained in an amount of 2-10 wt% in the monomer component.

## Patentansprüche

1. Verfahren zur Herstellung von Polymerteilchen, die eine Brechungsindexverteilung aufweisen, umfassend die Verwendung zweier unterschiedlicher, radikalisch polymerisierbarer Monomerkomponenten, deren jeweilige Polymere sich um 0,005 oder mehr im Brechungsindex unterscheiden; die Suspensionspolymerisation der ersten radikalisch polymerisierbaren Monomerkomponente im wäßrigen Medium in Gegenwart eines öllöslichen Polymerisationsstarters; den Beginn der Zugabe der zweiten radikalisch polymerisierbaren Monomerkomponente, während die Umsetzung der ersten Monomerkomponente zum Polymer 70 bis 95 % beträgt und die Fortführung der Polymerisation ohne erneut Polymerisationsstarter zuzugeben, dadurch gekennzeichnet, daß die zweite Monomerkomponente entsprechend dem Fortschreiten der Polymerisation kontinuierlich oder periodisch zugegeben wird, so daß die Monomere in einem Verhältnis von 5 bis 30 %, bezogen auf die Summe der Monomere und Polymere vorliegen.

2. Verfahren zur Herstellung eines Lichtverteilers, umfassend das Verfahren zur Herstellung von Polymerteilchen gemäß Anspruch 1 und den zusätzlichen Schritt der Dispersion dieser Polymerteilchen in einem transparenten Polymer, das einen Brechungsindex aufweist, der im wesentlichen dem des Randbereiches der Polymerteilchen entspricht.

3. Verfahren gemäß Anspruch 1 oder 2, wobei mit der Zugabe der zweiten radikalisch polymerisierbaren Monomerkomponente begonnen wird, während die Umsetzung der ersten Monomerkomponente zum Polymer 85 bis 95 % beträgt.

4. Verfahren gemäß Anspruch 1 oder 2, wobei sich die erste oder zweite Monomerkomponente hauptsächlich aus einem polymerisierbaren Monomer zusammensetzt, das einen Benzolring aufweist.

5. Verfahren gemäß Anspruch 1 oder 2, wobei sich die erste oder zweite Monomerkomponente hauptsächlich aus einem Alkylmethacrylat oder einem Alkylacrylat zusammensetzt.

6. Verfahren gemäß Anspruch 4 oder 5, wobei sich eine der ersten und der zweiten Monomerkomponenten hauptsächlich aus einem polymerisierbaren Monomer zusammensetzt, das einen Benzolring aufweist und sich die andere hauptsächlich aus einem Alkylmethacrylat oder einem Alkylacrylat zusammensetzt.

7. Verfahren gemäß Anspruch 1 oder 2, wobei ein polyfunktionelles Monomer mit zwei oder mehr radikalisch polymerisierbaren funktionellen Gruppen im Molekül in der ersten und/oder der zweiten Monomerkomponente enthalten ist.

8. Verfahren gemäß Anspruch 7, wobei das polyfunktionelle Monomer in einer Menge von 0,5 bis 10 Gew.-% in der Monomerkomponente enthalten ist.

9. Verfahren gemäß Anspruch 8, wobei das polyfunktionelle Monomer in einer Menge von 2 bis 10 Gew.-% in der Monomerkomponente enthalten ist.

## Revendications

1. Procédé de production de particules de polymère possédant une distribution d'indices de réfraction, qui comprend l'utilisation de deux composants monomères polymérisables par des radicaux, différents, dont les polymères respectifs ont des indices de réfraction respectifs qui diffèrent l'un de l'autre de 0,005 ou plus, la polymérisation en suspension d'un premier desdits composants monomères polymérisables par des radicaux, dans un milieu aqueux en présence d'un amorceur de polymérisation soluble dans l'huile, le début de l'ajout du second desdits composants monomères polymérisables par des radicaux alors que la conversion dudit premier composant monomère en polymère est de 70 à 95%, et la poursuite de la polymérisation sans nouvel apport de l'amorceur de polymérisation, caractérisé par l'ajout dudit second composant monomère en continu ou par intermittence selon l'avancement de la polymérisation de façon que les monomères soient présents dans une proportion de 5 à 30% rapportée à la somme des monomères et des polymères.

2. Procédé de production d'un distributeur de lumière comprenant le procédé de production de particules de polymère selon la revendication 1 et l'étape supplémentaire de dispersion de ces particules de polymère dans un polymère transparent ayant un indice de réfraction sensiblement égal à celui de la partie périphérique desdites particules de polymère.

3. Procédé selon la revendication 1 ou 2, dans lequel on débute l'ajout du second composant monomère polymérisable par des radicaux alors que la conversion du premier composant monomère en polymère est de 85 à 95%.

4. Procédé selon la revendication 1 ou 2, dans lequel le premier ou le second composant monomère est composé principalement d'un monomère polymérisable comportant un noyau benzénique.

5. Procédé selon la revendication 1 ou 2, dans lequel le premier ou le second composant monomère est composé principalement d'un méthacrylate d'alkyle ou d'un acrylate d'alkyle.

6. Procédé selon la revendication 4 ou 5, dans lequel l'un des premier et second composants monomères est composé principalement d'un monomère polymérisable comportant un noyau benzénique et l'autre est composé principalement d'un méthacrylate d'alkyle ou d'un acrylate d'alkyle.

7. Procédé selon la revendication 1 ou 2, dans lequel un monomère polyfonctionnel comportant deux ou plusieurs groupes fonctionnels polymérisables par des radicaux dans la molécule est contenu dans le premier et/ou le second composant monomère.

8. Procédé selon la revendication 7, dans lequel ledit monomère polyfonctionnel est contenu en une quantité de 0,5 à 10% en poids dans le composant monomère.

9. Procédé selon la revendication 8, dans lequel ledit monomère polyfonctionnel est contenu en une quantité de 2 à 10% en poids dans le composant monomère.
